# EUROPEAN PATENT SPECIFICATION

(11) **EP 0 387 411 B1**
(45) Date of publication and mention of the grant of the patent: **02.11.1994**
(21) Application number: 89122823.1
(22) Date of filing: 11.12.1989
(51) Int. Cl.: H02K 15/095, H02K 3/52

(54) **Methods and apparatus for producing stators with coil terminations at both ends**
Verfahren und Vorrichtung zur Herstellung von Ständern mit Wicklungsanschlüssen an beiden Enden
Procédé et appareils pour la production de stators avec terminaisons des bobines aux deux extrémités

(30) Priority: 13.03.1989 US 321919
(43) Date of publication of application: 19.09.1990
(73) Proprietor: AXIS S.p.A., I-50028 Tavarnelle Val di Pesa (Firenze) (IT)
(72) Inventor: Luciani, Sabatino, I-Sesto Fiorentino - FI (IT); Lumini, Antonio, I-Sesto Fiorentino - FI (IT)
(74) Representative: Lotti, Giorgio

(56) References cited:
- EP-A- 0 040 115
- US-A- 4 074 418
- PATENT ABSTRACTS OF JAPAN vol. 8, no. 231 (E-274)(1668) 24 October 1984, & JP-A-59 113763 (HITACHI) 30 June 1984,

## Description

### Background of the Invention

This invention relates to methods and apparatus for producing stators (e.g., electric motor stators), and more particularly to methods and apparatus for producing stators having coil terminations at both ends of the stator.

Most stators are made with the start and finish leads of the stator coils terminated on terminals located at only one axial end of the stator as shown for example in documents JP-A-59113764 and US-A-4074418.

Recently, however, electric motor manufacturers have become interested in producing stators with some coil leads terminated at one end of the stator and other coil leads terminated at the other end of the stator. For example, motors are being designed with two coils on each stator pole, the second coil being used as a brake coil for the motor. The leads of the second coil could be terminated at the same end as the first coil, and this would not affect the known stator winding methods and apparatus. However, some of these stator designs call for terminating some of the leads at the other end of the stator, which requires new stator winding methods and apparatus.

In view of the foregoing, it is an object of this invention to provide improved stator manufacturing methods and apparatus.

It is another object of this invention to provide methods and apparatus for producing stators having coil leads terminated at both ends of the stator.

### Summary of the Invention

These and other objects of the invention are accomplished in accordance with the principles of the invention by providing a method according to claim 1 and apparatus according to claim 4 for winding stators so that the ends of any coil can be terminated at respective opposite ends of the stator if desired.

Further features of the invention, its nature and various advantage will be more apparent from the accompanying drawings and the following detailed description of the preferred embodiments.

### Brief Description of the Drawings

FIG. 1 is a perspective view of a prior art two-pole stator having all coil leads terminated at one end of the stator.

FIG. 2 is a perspective view of a two-pole stator having some coil leads terminated at each end of the stator, and which can be made by the methods and apparatus of this invention.

FIG. 3 is a perspective view of another two-pole stator having two coils per pole, the two leads of each coil being terminated at respective oppositive ends of the stator. This stator can also be made by the methods and apparatus of this invention.

FIG. 4 is a partial elevational view, partly in section, of prior art apparatus for winding stators of the type shown in FIG. 1.

FIG. 5 is a partial elevational view, partly in section, taken generally along the line 5-5 in FIG. 4, but showing the apparatus at another point in its operating cycle.

FIG. 6 is a plan view of a portion of the prior art apparatus of FIGS. 4 and 5 (on the left), together with the additional apparatus of this invention (on the right).

FIG. 7 is a partial elevational view, partly in section, of the right-hand portion of the apparatus shown in FIG. 6.

FIG. 8 is a partial elevational view taken along the line 8-8 in FIG. 7.

### Detailed Description of the Preferred Embodiments

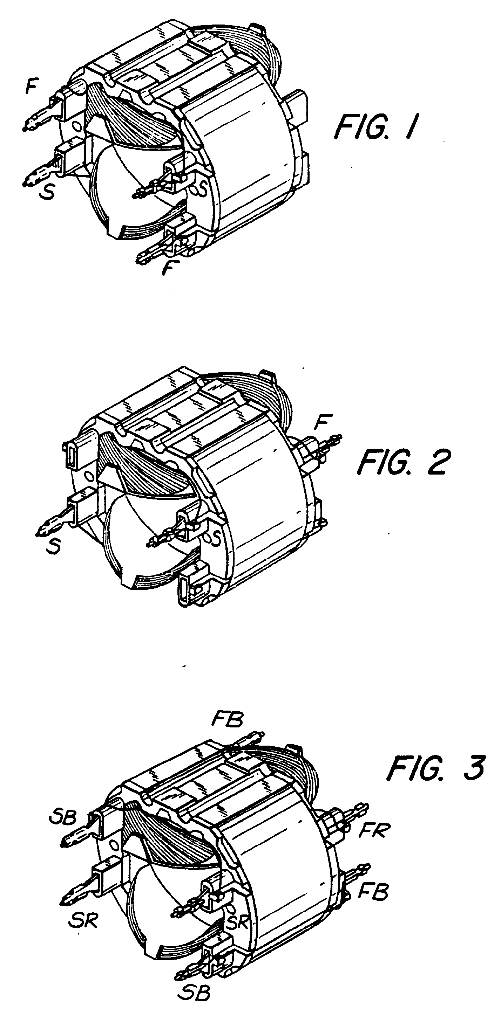

As has been mentioned, FIG. 1 shows a prior art two-pole stator having one coil wound on each pole. Both the start end S and the finish end F of each coil are terminated on the front end of the stator as viewed in FIG. 1. There are no coil terminations on the opposite rear end (largely hidden in FIG. 1) of the stator.

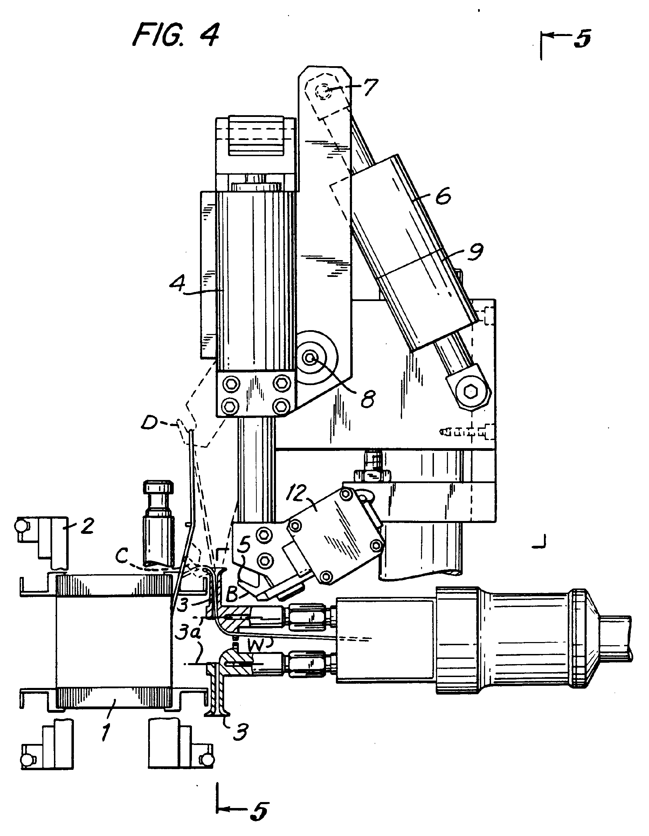

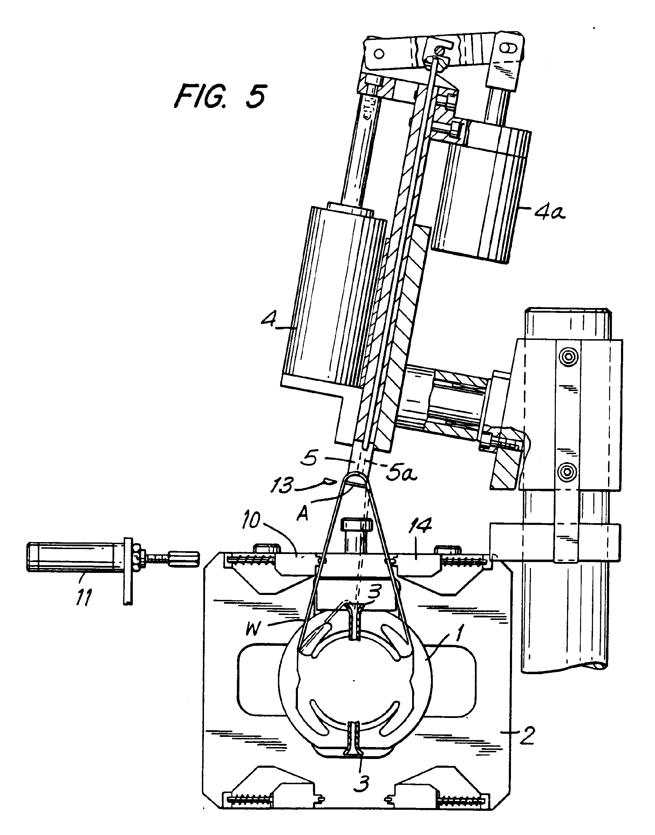

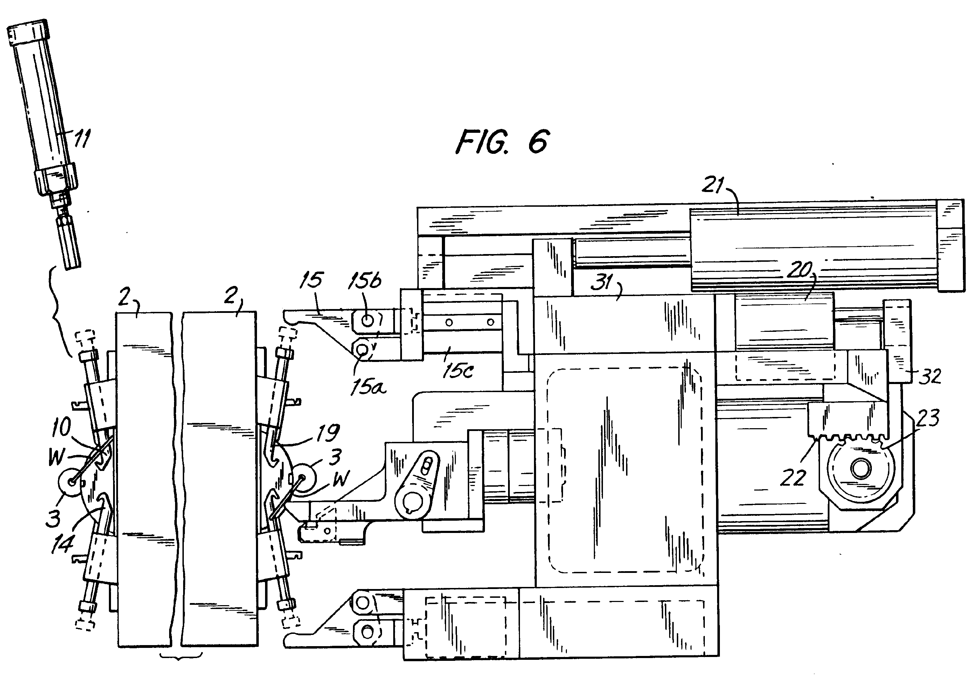

Prior art apparatus for producing stators of the type shown in FIG. 1 is shown in part in FIGS. 4 and 5, and in the left-hand portion of FIG. 6. Stator 1 is removably mounted in stator housing 2. The wire W for the upper and lower coils is supplied by upper and lower needles 3, respectively, which are made to alternately reciprocate longitudinally and angularly relative to stator 1 in order to wind the coils around the stator poles. In other words, needles 3 are first rotated to one side of the associated pole, then driven longitudinally through the stator, rotated back to the other side of the associated pole, pulled longitudinally back through the stator, and so on until the required number of windings has been placed on each pole. Note that in this particular embodiment each needle rotates about its own longitudinal axis 3a, so that when both needles are thus fully rotated to one side or the other, the needles can pass axially through stator 1 without interference.

When the coils have been wound, needles 3 are retracted and stopped in the position shown in FIGS. 4 and 5, and on the left in FIG. 6. Only the apparatus for ending the upper coil is shown and will now be described, it being understood that the lower coil ending apparatus is similar and operates at the same time. As shown in chain-dotted lines in FIGS. 4 and 5, the wire extends from upper needle 3 to the left-hand side of the upper coil as viewed in FIG. 5. Cylinder 4 retracts in order to lower hook 5 from the position A shown in FIG. 5 to the position B shown in solid lines in FIG. 4. Cylinder 6 then retracts in order to rotate elements 4, 5, etc., about pivotal mounting 8 via pivotal connection 7. This causes hook 5 to move from position B to position C in FIG. 4, thereby engaging the wire extending from the upper stator pole.

Cylinder 4 is now extended and cylinder 9 is retracted to cause hook 5 to move from position C to position D in FIG. 4. Cylinder 9 acts along the same axis as cylinder 6 so that retraction of cylinder 9 causes additional rotation of hook 5 as it travels from position C to position D. These motions of hook 5 pull a loop of additional wire from needle 3 and cause the left-hand leg of that loop as viewed in FIG. 5 to enter claw 10 which is mounted on stator housing 2. Cylinder 11 is extended at the appropriate time to open claw 10 and allow it to receive the wire. Thereafter, cylinder 11 is retracted to allow the depicted spring to close claw 10 on the wire. Cylinder 4a is now retracted to cause clamp 5a to clamp the wire loop in hook 5. Cylinder 12, which is mounted on hook 5, is then operated to cause knife 13 to cut through the left-hand leg of the wire loop. Stator 1 is now free of any connection to the wire emanating from needle 3. Stator housing 2 (with wound stator 1 still inside) can now be moved away from the winding station by other parts of the apparatus (not shown) in order to convey the stator to a terminating station (also not shown) where the coil ends are permanently mounted on the end of the stator shown in FIG. 1.

As the wound stator is thus being conveyed away, a new unwound stator is brought into position adjacent needles 3 in another stator housing 2. When the new stator and stator housing are in position, needles 3 are rotated (clockwise as viewed in FIG. 5) so that the end of the upper needle is adjacent the right-hand side of the upper pole. This causes the wire extending from the end of needle 3 to hook 5 to enter claw 14 on stator housing 2. A cylinder (not shown, but similar to cylinder 11) is extended at the appropriate time to open clamp 14 to allow it to receive the wire extending from the end of needle 3. Thereafter, that cylinder is retracted to allow the depicted spring to close claw 14 on the wire. Winding of the new stator can now begin, and all of the elements associated with hook 5 are returned to their initial positions to prepare them for use as described above at the end of the stator winding cycle.

From the foregoing it will be apparent that by itself the apparatus of FIGS. 4 and 5 is only suitable for use in winding stators having all coil ends terminated on the end of the stator which is visible in FIG. 5.

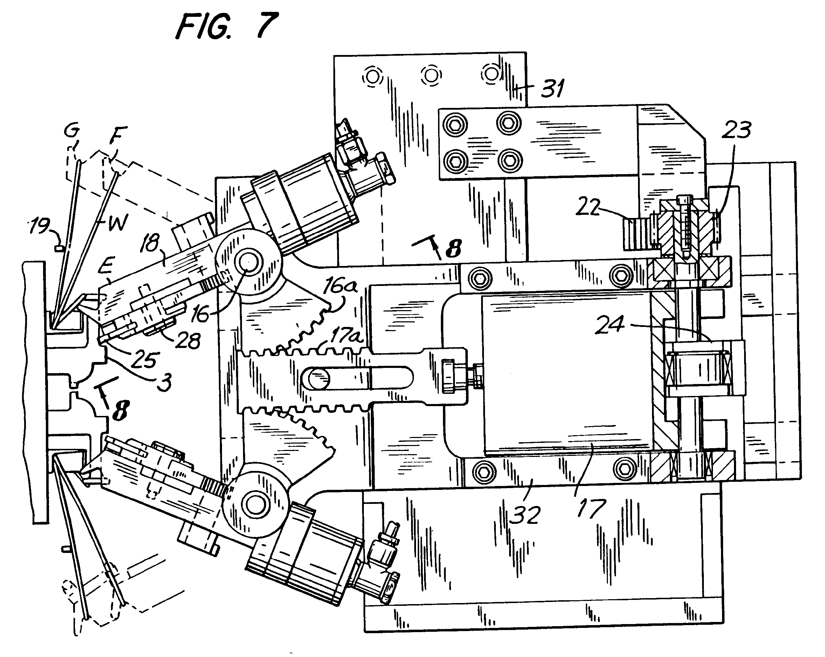

FIGS. 6 and 7 show an illustrative embodiment of apparatus constructed in accordance with this invention which can be added to the apparatus of FIGS. 4 and 5 to allow some coil ends to be terminated on one end of the stator, while other coil ends are terminated on the other end of the stator.

The right-hand portion of FIG. 6 shows the condition of the apparatus after the stator has been fully wound. Needles 3 extend through the stator (from the left) and have been rotated so that their ends are vertical (see also FIG. 7). Accordingly, wire extends from upper needle 3 to the lower side (as viewed in FIG. 6) of the upper coil. (Again, only termination of the upper coil will be described in detail, it being understood that the lower coil is terminated similarly at the same time.) Cylinder 21 then moves the "inner lead-pull mechanism" (i.e., the apparatus shown on the right in FIG. 6 and in FIG. 7) to the left toward the stator and therefore into the position shown in FIGS. 6 and 7. (Cylinder 21 is mounted on the machine framework and moves slide 31 (on which elements 15, 20, and 22 are mounted) and slide 32. Slide 32 is movable on appropriate guides with respect to slide 31 by operation of cylinder 20. Elements 16 are mounted on slide 32, and cylinder 17 is movably mounted on slide 32 on guides which allow that cylinder to move in response to rotation of pinion 23. This structure will become clearer as the description of its operation proceeds.)

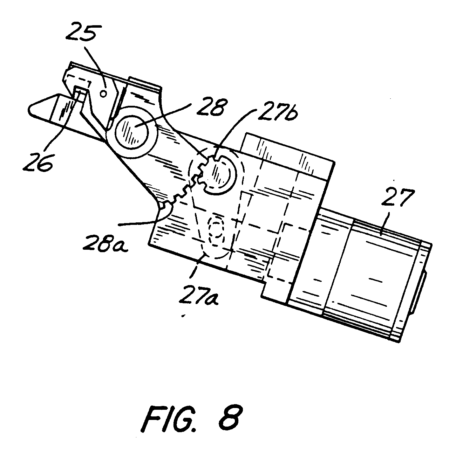

Claw 19 is opened by pivoting lever 15 counterclockwise about pivot 15a. Lever 15 is pivoted in this manner by extension of cylinder 15c which acts on the lever through connection 15b. Cylinder 17 then extends to cause rack 17a to move to the left, thereby rotating gear segment 16a clockwise about pivot 16. Hook 18 rotates with gear segment 16a, thereby pulling a loop of additional wire from needle 3 as hook 18 moves from position E to position F. Cylinder 20 then retracts, which causes pivot 16 to move toward the stator. This in turn causes hook 18 to move leftward in the general direction from position F to position G, thereby inserting the wire into claw 19. In order to keep the wire taut during this phase of the operation, rack 22 rotates pinion 23 and therefore cam 24. This urges cylinder 17 and therefore rack 17a to the left relative to pivot 16, thereby producing further clockwise pivoting of hook 18 as it moves to its final position G. When hook 18 reaches position G, claw 19 closes on the wire. The foregoing motion of hook 18, together with the wire deflection caused by contact with claw 19, causes the wire to slide into the spacing between hook 25 (pivotally mounted on hook 18) and one side of hook 18, thereby placing the wire in the proximity of the cutter portion 26 (FIG. 8) of hook 25.

Cylinder 21 now retracts to pull additional wire from needle 3. Next the wire is cut by cutting edge 26. This is accomplished by extending cylinder 27, which causes arm 27a to rotate pinion gear 27b, thereby rotating sector gear 28a about pivot 28 and pivoting hook 25 so that cutting edge 26 cuts the wire. The wire held by claw 19 will be subsequently permanently mounted on the end of the stator which is adjacent claw 19 by terminating station apparatus (not shown). Needle 3 is now rotated away from the claw 19 which is holding the winding lead. Needle 3 is then withdrawn from the stator so that the free end of the wire emanating from the needle lies along the upper side of the upper coil as viewed in FIG. 6. After withdrawal from the stator, the end of needle 3 is returned to the vertical position (as shown on the left in FIG. 6) so that hook 5 (operating generally as described above in connection with FIGS. 4 and 5, but without the use of claws 10 and 14 at this time) can catch the wire, pull its free end out of the stator, and then hold the wire (with the aid of clamp 5a) until the next stator is in position and winding of that next stator begins. The wound stator is now moved out of position and a new unwound stator is moved into position for winding.

When the new unwound stator is in position adjacent needles 3, the apparatus of FIGS. 4 and 5 is further operated as generally described above to secure the wire held by hook 5 in claw 14 and to thereafter begin the coil winding process on the new stator.

The result of the coil winding operation described above is a stator of the type shown in FIG. 2, i.e., the start termination S of each coil is on the front face of the stator, while the finish termination F of each coil is on the rear face of the stator. If two coils are required on each stator pole (i.e., a regular coil R and a brake coil B as shown in FIG. 3), the winding operation described above can be repeated for each type of coil so that the start SR and finish FR terminations of each regular coil are on respective opposite faces of the stator, and so that the start SB and finish FB termination of each brake coil are also on respective opposite faces of the stator.

## Claims

1. The method of winding a coil of wire on a stator (1) having a longitudinal axis and first and second faces adjacent respective opposite ends of said longitudinal axis, said wire being supplied from wire supply means (3) which is movable relative to said stator, said method comprising the steps of: positioning said wire supply means (3) adjacent said first face of said stator; anchoring the wire extending from said wire supply means in first claw means for anchoring (10,14) located adjacent said first face of said stator; alternately reciprocating said wire supply means longitudinally along and rotationally about said longitudinal axis to wind said wire extending from said first claw means for anchoring (10, 14) to said wire supply means (3) on said stator to produce said coil;
the method being further characterized by the following steps:
stopping the reciprocation of said wire supply means (3) when said coil includes a predetermined number of windings and said wire supply means (3) is adjacent said second face of said stator (1);
anchoring the wire extending from said coil to said wire supply means (3) in second claw means for anchoring (19), located adjacent said second face of said stator; and
cutting the wire extending from said second claw means for anchoring (19) to said wire supply means (3).

2. The method defined in claim 1 further comprising the step of:
moving said wire supply means back (3) to a position adjacent said first face of said stator (1) after said cutting step.

3. The method defined in claim 2, characterised in that when said wire supply means (3) is back to a position adjacent said first face of said stator (1) after said cutting step, the wire is caught to pull its free end out of the stator, so that it can be held adjacent to said first face.

4. The method defined in claim 1 characterised in that said anchoring step comprises the step of pulling a loop of additional wire from said wire supply means (3) to anchor the wire to said second claw means for anchoring (19).

5. Apparatus for winding a coil wire on a stator (1) having a longitudinal axis and first and second faces adjacent respective opposite ends of said longitudinal axis, said apparatus comprising:
wire supply means (3) mounted for movement relative to said stator (1); means for positioning said wire supply means (3) adjacent said first face of said stator;
first claw means for anchoring (10, 14) located adjacent said first face of said stator (1) for anchoring the wire extending from said supply means (3);
means for alternately reciprocating said wire supply means (3) longitudinally along and rotationally about said longitudinal axis (3a) to wind the wire extending from said first claw means for anchoring (10, 14) to said wire supply means on said stator (1) to produce a coil having the desired number of windings on said stator;
the apparatus being further characterized by providing:
means for anchoring (18) the wire extending from said coil to said wire supply means in second claw means for anchoring (19) located adjacent said second face of said stator when said wire supply means is positioned adjacent said second face of said stator, and
means for cutting (25,26) the wire extending from said second claw means for anchoring (19) to saia wire supply means (3).

6. The apparatus defined in claim 5 further comprising:
means for moving said wire supply means (3) back to a position adjacent said first face of said stator (1) after operation of said means for cutting.

7. The apparatus defined in claim 5 or 6 characterised in that said means for anchoring in said second claw means for anchoring (19) further comprise means (18) for pulling a loop of additional wire from said wire supply means (3) to anchor the wire extending from said coil to said wire supply means (3).

## Patentansprüche

1. Verfahren zum Wickeln einer Drahtspule auf einem Stator (1), der eine Längsachse und erste und zweite Stirnseiten aufweist, die an den jeweiligen gegenüberliegenden Enden der Längsachse angrenzen, der Draht wird von einer Drahtversorgungseinrichtung (3) zugeführt, die relativ zum Stator bewegbar ist, das Verfahren umfaßt die folgenden Verfahrensschritte: Positionieren der Drahtversorgungseinrichtung (3), die an der ersten Stirnfläche des Stators angrenzt; Verankern des Drahtes, der sich von der Drahtversorgungseinrichtung (3) aus erstreckt, in ersten Klemmeinrichtungen zum Verankern (10, 14), die angrenzend an die erste Stirnseite des Stators plaziert sind; wechselseitiges Hin- und Herbewegen der Drahtversorgungseinrichtung in Längsrichtung entlang und in Rotationsrichtung um die Längsachse herum, um den Draht, der sich von der ersten Klemmeinrichtung zum Verankern (10, 14) ausgehend hin zur Drahtversorgungseinrichtung (3) erstreckt, auf den Stator zu wickeln, um damit die Spule herzustellen;
das Verfahren wird weiterhin durch die folgenden Verfahrensschritte gekennzeichnet:
Anhalten der Hin- und Herbewegung der Drahtversorgungseinrichtung (3), sobald die Spule eine vorbestimmte Anzahl von Wicklungen aufweist und die Drahtversorgungseinrichtung (3) an der zweiten Stirnseite des Stators (1) angrenzt;
Verankern des Drahtes, der sich von der Spule ausgehend zur Drahtversorgungseinrichtung (3) erstreckt, in einer zweiten Klemmeinrichtung zum Verankern (19), die angrenzend an die zweite Stirnseite des Stators plaziert ist; und
Durchtrennen des Drahtes, der sich von der zweiten Klemmeinrichtung zum Verankern (19) ausgehend zur Drahtversorgungseinrichtung (3) erstreckt.

2. Verfahren nach Anspruch 1, weiterhin den Verfahrensschritt enthaltend:
Zurückbewegen der Drahtversorgungseinrichtung (3), im Anschluß an den Verfahrensschritt des Durchtrennens, zu einer Position, die an der ersten Stirnseite des Stators (1) angrenzt.

3. Verfahren nach Anspruch 2, dadurch gekennzeichnet, daß, sobald sich im Anschluß an den Verfahrensschritt des Durchtrennens, die Drahtversorgungseinrichtung (3) an eine Position zurückbewegt hat, die an der ersten Stirnseite des Stators (1) angrenzt, der Draht eingefangen wird, um sein freies Ende aus dem Stator zu ziehen, so daß es an der ersten Stirnseite angrenzend festgehalten werden kann.

4. Verfahren nach Anspruch 1, dadurch gekennzeichnet, daß der Verfahrensschritt des Verankerns den Verfahrensschritt, bei dem eine Schleife aus zusätzlichem, von der Drahtversorgungseinrichtung (3) stammendem Draht gezogen wird, beinhaltet, um den Draht an der zweiten Klemmeinrichtung zum Verankern (19) zu verankern.

5. Vorrichtung zum Wickeln einer Drahtspule auf einem Stator (1), der eine Längsachse und erste und zweite Stirnseiten aufweist, die an den jeweiligen gegenüberliegenden Enden der Längsachse angrenzen; die Vorrichtung umfaßt:
eine Drahtversorgungseinrichtung (3), die relativ zum Stator (1) beweglich befestigt ist; eine Einrichtung zum Positionieren der Drahtversorgungseinrichtung (3), die an der ersten Stirnfläche des Stators angrenzt;
erste Klemmeinrichtungen zum Verankern (10, 14), die an der ersten Stirnfläche des Stators (1) angrenzen, um den Draht zu verankern, der sich von der Drahtversorgungseinrichtung (3) ausgehend erstreckt;
Einrichtungen zum wechselseitiges Hin- und Herbewegen der Drahtversorgungseinrichtung (3) in Längsrichtung entlang und in Rotationsrichtung um die Längsachse (3a), um den Draht, der sich von der ersten Klemmeinrichtung zum Verankern (10, 14) ausgehend zur Drahtversorgungseinrichtung (3) erstreckt, auf dem Stator (1) zu wickeln, um eine Spule herzustellen, die die gewünschte Anzahl von Wicklungen auf dem Stator aufweist;
die Vorrichtung ist weiterhin gekennzeichnet durch: Einrichtungen zum Verankern (18) des Drahtes, der sich von der Spule ausgehend zur Drahtversorgungseinrichtung erstreckt, in einer zweiten Klemmeinrichtung zum Verankern (19), die an die zweite Stirnseite des Stators angrenzend plaziert ist, sobald die Drahtversorgungseinrichtung so plaziert ist, daß sie an die zweite Stirnseite des Stators angrenzt, und
Einrichtungen zum Durchtrennen (25, 26) des Drahtes, die sich von der zweiten Klemmeinrichtung zum Verankern (19) ausgehend zur Drahtversorgungseinrichtung (3) erstrecken.

6. Vorrichtung nach Anspruch 5, weiterhin umfassend:
Einrichtung zum Zurückbewegen der Drahtversorgungseinrichtung (3) zu einer Position, die an die erste Stirnfläche des Stators (1) angrenzt, nach Betätigung der Einrichtungen zum Durchtrennen.

7. Vorrichtung nach Anspruch 5 oder 6, dadurch gekennzeichnet, daß die Einrichtungen zum Verankern in der zweiten Klemmeinrichtung zum Verankern (19) weiterhin eine Einrichtung (18) zum Ziehen einer Schleife aus zusätzlichem, von der Drahtversorgungseinrichtung (3) stammendem Draht enthält, um den Draht zu verankern, der sich von der Spule ausgehenden zur Drahtversorgungseinrichtung (3) erstreckt.

## Revendications

1. Procédé de bobinage d'un enroulement de fil métallique sur un stator (1) ayant un axe longitudinal et une première et une seconde faces adjacentes aux extrémités opposées respectives dudit axe longitudinal, ledit fil métallique étant amené par un moyen d'amenée (3) qui est mobile par rapport audit stator, ledit procédé comportant les étapes consistant à :
positionner ledit moyen d'amenée (3) de fil métallique au voisinage de ladite première face dudit stator ; ancrer le fil métallique s'étendant depuis ledit moyen d'amenée dans un premier moyen d'agrippement pour l'accrochage (10, 14) disposé au voisinage de ladite première face dudit stator ; donner un mouvement alternatif de va-et-vient audit moyen d'amenée de fil métallique longitudinalement le long et en rotation autour dudit axe longitudinal pour bobiner ledit fil métallique s'étendant depuis ledit premier moyen d'agrippement pour l'accrochage (10, 14) jusqu'audit moyen d'amenée (3) sur ledit stator en vue de réaliser ledit enroulement ; le procédé étant de plus caractérisé par les étapes suivantes:
- arrêter le mouvement de va-et-vient dudit moyen d'amenée (3) de fil métallique lorsque ladite bobine comprend un nombre prédéterminé de tours et que ledit moyen de débitement (3) de fil métallique est adjacent à ladite seconde face dudit stator (1) ;
- accrocher le fil métallique s'étendant depuis ladite bobine jusqu'audit moyen d'amenée (3) de fil métallique sur un second moyen d'agrippement pour accrochage (19), situé au voisinage de ladite seconde face dudit stator ; et
- couper le fil métallique s'étendant depuis ledit second moyen d'agrippement pour accrochage (19) jusqu'audit moyen d'amenée (3) de fil métallique.

2. Procédé selon la revendication 1, comportant de plus l'étape consistant à :
- replacer ledit moyen d'amenée (3) de fil métallique dans une position adjacente à ladite première face dudit stator (1) après l'étape de coupe précitée.

3. Procédé selon la revendication 2, caractérisé en ce que, lorsque ledit moyen d'amenée (3) de fil métallique est revenu dans une position adjacente à ladite première face dudit stator (1) après l'étape de coupe précitée, le fil métallique est attrappé pour tirer son extrémité libre à l'extérieur du stator, de façon que celle-ci puisse être placée au voisinage de ladite première face.

4. Procédé selon la revendication 1, caractérisé en ce que l'étape d'accrochage précitée comporte l'étape consistant à tirer une boucle de fil métallique supplémentaire depuis ledit moyen d'amenée (3) de fil métallique pour accrocher le fil métallique audit second moyen d'agrippement pour accrochage (19).

5. Dispositif de bobinage d'un enroulement de fil métallique sur un stator (1) ayant un axe longitudinal et une première et une seconde faces adjacentes aux extrémités opposées respectives dudit axe longitudinal, ledit dispositif comportant :
- un moyen d'amenée (3) de fil métallique monté pour être déplaçable par rapport audit stator (1), un moyen pour positionner ledit moyen d'amenée (3) de fil métallique au voisinage de ladite première face dudit stator ;
- un premier moyen d'agrippement pour accrochage (10, 14) disposé au voisinage de ladite première face dudit stator (1) pour accrocher le fil métallique s'étendant depuis ledit moyen d'amenée (3) ;
- un moyen pour donner un mouvement alternatif de va-et-vient audit moyen d'amenée (3) de fil métallique longitudinalement le long et en rotation autour dudit axe longitudinal (3a) afin de bobiner le fil métallique s'étendant depuis ledit premier moyen d'agrippement pour accrochage (10, 14) jusqu'audit moyen d'amenée de fil métallique sur ledit stator (1) en vue de réaliser un enroulement ayant le nombre souhaité de tours sur ledit stator ;
le dispositif étant de plus caractérisé en ce qu'il comporte:
- un moyen d'accrochage (18) du fil métallique s'étendant depuis ledit enroulement jusqu'audit moyen d'amenée de fil métallique sur un second moyen d'agrippement pour accrochage (19) disposé au voisinage de ladite seconde face dudit stator lorsque ledit moyen d'amenée de fil métallique est positionné au voisinage de ladite seconde face dudit stator, et
- un moyen de coupe (25, 26) du fil métallique s'étendant depuis ledit second moyen d'agrippement pour accrochage (19) jusqu'audit moyen d'amenée (3) de fil métallique.

6. Dispositif selon la revendication 5, comportant de plus :
- un moyen pour déplacer ledit moyen d'amenée (3) de fil métallique dans une position adjacente à ladite première face dudit stator (1) après l'action dudit moyen de coupe.

7. Dispositif selon la revendication 5 ou 6, caractérisé en ce que ledit moyen d'accrochage sur ledit second moyen d'agrippement pour accrochage (19) comporte de plus un moyen (18) pour tirer une boucle de fil métallique supplémentaire depuis ledit moyen d'amenée (3) de fil métallique pour accrocher le fil métallique s'étendant depuis ledit enroulement jusqu'audit moyen d'amenée (3) de fil métallique.
